# EUROPEAN PATENT APPLICATION

(11) **EP 4 803 939 A1**
(43) Date of publication of application: **09.09.2026**
(21) Application number: 24886346.6
(22) Date of filing: 01.11.2024
(51) Int. Cl.: G02B 6/00, G02B 27/01, G02B 5/18, G02B 6/27

(54) **LIGHT GUIDE DEVICE AND ELECTRONIC DEVICE COMPRISING SAME**

(30) Priority: 03.11.2023 KR 20230150992; 12.07.2024 KR 20240092295
(71) Applicant: LG Innotek Co., Ltd., Seoul 07796 (KR)
(72) Inventor: LEE, Kyu Tae, Seoul 07796 (KR); KIM, Min Seong, Seoul 07796 (KR)
(74) Representative: Plasseraud IP
(86) International application number: PCT/KR2024/017039
(87) International publication number: WO 2025/095675

(57) **Abstract**

An embodiment discloses a light guide device comprising: a first substrate; a first diffractive element unit disposed on the first substrate; a second substrate spaced apart from the first substrate; a second diffraction element unit disposed on the second substrate; a first reference marker disposed on the first substrate; and a second reference marker disposed on the second substrate, wherein the first reference marker and the second reference marker do not overlap at least partially in a stacking direction.

## Description

### [Technical Field]

Embodiments relate to a light guide device and an electronic device including the same.

### [Background Art]

Virtual reality (VR) refers to a special environment or situation which is generated by artificial technologies using computers or the like and is similar but not exactly equal to the real world, or to the technologies themselves.

Augmented reality (AR) is a technology for synthesizing a virtual object or virtual information with a real environment such that the synthesized virtual object or virtual information looks like a real object or real information that is present in the real environment.

Mixed reality (MR) or hybrid reality is a technology for combining the virtual world and the real world to generate a new environment or new information. In particular, MR is an experience in which real and virtual objects interact with each other in real time.

In this case, the generated virtual environment or situation stimulates the five senses of a user and allows the user to have spatial and temporal experiences similar to reality to freely cross the boundary between reality and imagination. In addition, the user may not only simply be immersed in such an environment but may also interact with objects implemented in the environment by manipulating a real device or giving instructions.

Recently, research on gear and devices used in these technical fields has been actively underway. However, there is a growing need to miniaturize these devices and improve optical performance.

### [Description of Invention]

### [Technical Problem]

Embodiments provide a light guide device and an electronic device including the same which are more precisely assembled by forming a reference marker on a light guide device in using a light guide device used for augmented reality (AR) and an electronic device including the same.

In addition, embodiments may provide a light guide device and an electronic device in which, according to a refractive index and transmittance of a reference marker, the reference marker is not visible to the eyes of a user, thereby suppressing interference with user recognition.

In addition, embodiments may provide a light guide device and an electronic device which are capable of accurately determining misalignment by applying conditions (period, height, and width) of a reference marker according to a wavelength at which vision recognition is possible, and allowing first and second reference markers spaced apart from each other to have identical or different shapes for each region.

Objects to be solved in the embodiments are not limited thereto, and the embodiments may also include objects or effects that can be understood from the solution or embodiment of the problem described below.

### [Technical Solution]

A light guide device according to an embodiment includes a first substrate, a first diffraction element unit disposed on the first substrate, a second substrate disposed to be spaced apart from the first substrate, a second diffraction element unit disposed on the second substrate, a first reference marker disposed on the first substrate, and a second reference marker disposed on the second substrate, wherein the first reference marker and the second reference marker do not at least partially overlap each other in a stacking direction.

Any one of a period of the first reference marker and a period of the second reference marker may be different from a period of any one of the first diffraction element unit and the second diffraction element unit.

Any one of the period of the first reference marker and the period of the second reference marker may be greater than the period of any one of the first diffraction element unit and the second diffraction element unit.

A wavelength band in which the first reference marker and the second reference marker have minimum transmittance may be different from a diffraction wavelength of each of the first diffraction element unit and the second diffraction element unit.

The first reference marker and the second reference marker may be positioned within an eye box.

The first reference marker and the first substrate may have a refractive index difference of 0 to 1.

The first reference marker and the first diffraction element unit may have the same material.

The second reference marker and the second diffraction element unit may have the same material.

The first reference marker, the second reference marker, the first diffraction element unit, and the second diffraction element unit may include at least one of a polymer, TiO₂, HfO₂, Al₂O₃, and SiO₂.

A wavelength band in which the first reference marker has minimum transmittance may be equal to a wavelength band in which the second reference marker has minimum transmittance.

The first reference marker and the second reference marker may have different periods.

The stacking direction may be a direction from the second substrate to the first substrate.

The first reference marker and the second reference marker may include a first region and a second region having the same shape, respectively.

When the first region and the second region at least partially overlap each other in the stacking direction, the first diffraction element unit and the second diffraction element unit may be misaligned in a direction perpendicular to the stacking direction.

The first reference marker and the second reference marker may include a third region and a fourth region having different shapes.

When the third region and the fourth region at least partially overlap each other in the stacking direction, the first diffraction element unit and the second diffraction element unit may be at least partially misaligned in the stacking direction.

The first reference marker and the second reference marker may have a period of 700 nm to 900 nm.

The first reference marker and the second reference marker may have a refractive index of 1.7 to 2.7.

The first reference marker and the second reference marker may have a height of 100 nm to 600 nm in the stacking direction.

The first diffraction element unit may include a first input diffraction element, a first transfer diffraction element, and a first output diffraction element, on which light is sequentially incident.

The second diffraction element unit may include a second input diffraction element, a second transfer diffraction element, and a second output diffraction element, on which light is sequentially incident.

### [Advantageous Effects]

Embodiments implement a light guide device and an electronic device including the same which are more precisely assembled by forming a reference marker on a light guide device in using a light guide device used for augmented reality (AR) and an electronic device including the same.

In addition, embodiments can implement a light guide device and an electronic device in which, according to a refractive index and transmittance of a reference marker, the reference marker is not visible to the eyes of a user, thereby suppressing interference with user recognition.

In addition, embodiments can implement a light guide device and an electronic device which are capable of accurately determining misalignment by applying conditions (period, height, and width) of a reference marker according to a wavelength at which vision recognition is possible, and allowing first and second reference markers spaced apart from each other to have identical or different shapes for each region.

The various advantageous advantages and effects of the present invention are not limited to the above-described content and may be more readily understood in the course of describing a specific embodiment of the present invention.

### [Description of Drawings]

FIG. 1 is a block diagram illustrating a configuration of an electronic device for extended reality according to an embodiment of the present invention.
FIG. 2 is a perspective view of an electronic device for augmented reality according to an embodiment of the present invention.
FIG. 3 is a view of a projection device and a light guide device according to an embodiment.
FIG. 4 is an exploded view of the light guide device according to an embodiment.
FIG. 5 is a cross-sectional view for describing a light guide device according to an embodiment.
FIG. 6 shows a plan view and a cross-sectional view of a reference marker in the light guide device according to an embodiment.
FIG. 7 is a view for describing positions of a first reference marker and a second reference marker in a light guide device according to an embodiment.
FIG. 8 is a view of the first reference marker in the light guide device according to an embodiment.
FIG. 9 is a view of the second reference marker in the light guide device according to an embodiment.
FIG. 10 is a graph showing transmittance for each wavelength according to conditions of reference markers in a light guide device according to the embodiment.
FIG. 11 is a graph showing transmittance for each wavelength according to a reference marker of one structure in a light guide device according to an embodiment.
FIG. 12 is a graph showing transmittance for each wavelength according to a reference marker of another structure in a light guide device according to an embodiment.
FIG. 13 is a view illustrating arrangement positions of reference markers in a light guide device according to an embodiment.
FIG. 14 is a view for describing another example and positions of a first reference marker and a second reference marker in a light guide device according to an embodiment.
FIG. 15 is a view for describing still another example and positions of a first reference marker and a second reference marker in a light guide device according to an embodiment.
FIG. 16 is a view for describing yet another example and positions of a first reference marker and a second reference marker in a light guide device according to an embodiment.

### [Modes of the Invention]

Hereinafter, exemplary embodiments of the present invention will be described with reference to the accompanying drawings.

However, the technical spirit of the present invention is not limited to the few embodiments which will be described and may be realized using various other embodiments, and at least one component of the embodiments may be selectively coupled, substituted, and used to realize the technical spirit within the range of the technical spirit of the present invention.

In addition, unless clearly and specifically defined otherwise by context, all terms (including technical and scientific terms) used herein may be interpreted as having customary meanings to those skilled in the art, and meanings of generally used terms, such as those defined in commonly used dictionaries, will be interpreted by considering contextual meanings of the related technology.

In addition, the terms used in the embodiments of the present invention are for the purpose of describing the embodiments and are not intended to limit the present invention.

In the present specification, unless clearly indicated otherwise by the context, singular forms include the plural forms thereof, and in a case in which "at least one (or one or more) among A, B, and C" is described, this may include at least one combination among all combinations which may be combined with A, B, and C.

In addition, in descriptions of components of the present invention, terms such as "first," "second," "A," "B," "(a)," and "(b)" may be used.

The terms are only to distinguish one element from another element, and an essence, order, and the like of the elements are not limited by the terms.

In addition, it should be understood that, when an element is referred to as being "connected or coupled" to another element, such a description may include both of a case in which the element is directly connected or coupled to the other element and a case in which the element is connected or coupled to the other element with still another element disposed therebetween.

In addition, in a case in which any one element is described as being formed or disposed "on or below" another element, such a description includes both cases in which the two elements are formed or disposed in direct contact with each other and in which one or more other elements are interposed between the two elements. In addition, when one element is described as being disposed "on or under" another element, such a description may include a case in which the one element is disposed at an upper side or a lower side with respect to the other element.

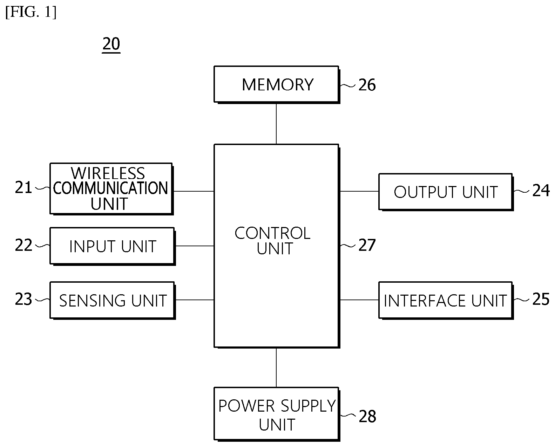

FIG. 1 is a block diagram illustrating a configuration of an electronic device for extended reality according to an embodiment of the present invention.

Referring to FIG. 1, an electronic device 20 for extended reality may include a wireless communication unit 21, an input unit 22, a sensing unit 23, an output unit 24, an interface unit 25, a memory 26, a control unit 27, and a power supply unit 28. Since the components shown in FIG. 1 are not essential for implementing the electronic device 20, the electronic device 20 described in the present specification may include more or fewer components than listed above.

More specifically, among the above components, the wireless communication unit 21 may include one or more modules that enable wireless communication between the electronic device 20 and a wireless communication system, between the electronic device 20 and another electronic device, or between the electronic device 20 and an external server. In addition, the wireless communication unit 21 may include one or more modules that connect the electronic device 20 to one or more networks.

The wireless communication unit 21 may include at least one of a broadcast reception module, a mobile communication module, a wireless Internet module, a short-range communication module, and a position information module.

The input unit 22 may include a camera or an image input unit for inputting an image signal, a microphone or an audio input unit for inputting an audio signal, and a user input unit (for example, a touch key or a push key (mechanical key)) for receiving information from a user. Voice data or image data collected by the input unit 22 may be analyzed and processed as a control instruction of a user.

The sensing unit 23 may include one or more sensors for detecting at least one of information in the electronic device 20, information about an environment surrounding the electronic device 20, and user information.

For example, the sensing unit 23 may include at least one of a proximity sensor, an illumination sensor, a touch sensor, an acceleration sensor, a magnetic sensor, a G-sensor, a gyroscope sensor, a motion sensor, a red-green-blue (RGB) sensor, an infrared sensor (IR sensor), a finger scan sensor, an ultrasonic sensor, an optical sensor (for example, a photographing device), a microphone, a battery gauge, an environmental sensor (for example, a barometer, a hygrometer, a thermometer, a radiation detection sensor, a heat detection sensor, or a gas detection sensor), and a chemical sensor (for example, an electronic nose, a healthcare sensor, or a biometric sensor).

Meanwhile, in the electronic device 20 disclosed in the present specification, information detected from at least two sensors of these sensors may be combined and used.

The output unit 24 may be for generating output related to a visual sense, an auditory sense, or a haptic sense and may include at least one of a display unit, an audio output unit, a haptic module, and an optical output unit. The display unit may form an inter-layered structure with a touch sensor or may be formed integrally therewith to implement a touchscreen. The touchscreen may function as a user input device that provides an input interface between the electronic device 20 for augmented reality and a user, and at the same time, may provide an output interface between the electronic device 20 for augmented reality and the user.

The interface unit 25 serves as a passageway for various types of external devices connected to the electronic device 20. Through the interface unit 25, the electronic device 20 may receive virtual reality or augmented reality content from an external device and may perform a mutual interaction by exchanging various input signals, sensing signals, and data.

For example, the interface unit 25 may include at least one of a wired/wireless headset port, an external charger port, a wired/wireless data port, a memory card port, a port for connecting a device equipped with an identification module, an audio input/output (I/O) port, a video I/O port, and an earphone port.

In addition, the memory 26 stores data for supporting various functions of the electronic device 20. The memory 26 may store a plurality of application programs (or applications) executed by the electronic device 20, data for the operation of the electronic device 20, and commands. At least some of these application programs may be downloaded from an external server through wireless communication. In addition, at least some of these application programs may be present on the electronic device 20 from the time of shipment for basic functions of the electronic device 20 (for example, functions of receiving a call, placing a call, receiving a message, and sending a message).

In addition to operations related to the application program, the control unit 27 typically controls the overall operation of the electronic device 20. The control unit 27 may process signals, data, information, and the like input or output through the components described above.

In addition, the control unit 27 may control at least some of the components by executing the application program stored in the memory 26, thereby providing appropriate information to a user or processing a function. Furthermore, in order to execute the application program, the control unit 27 may combine and operate at least two of the components included in the electronic device 20.

In addition, the control unit 27 may detect the movement of the electronic device 20 or a user using a gyroscope sensor, a gravity sensor, a motion sensor, or the like included in the sensing unit 23. Alternatively, the control unit 27 may detect an object approaching the electronic device 20 or a user using a proximity sensor, an illumination sensor, a magnetic sensor, an infrared sensor, an ultrasonic sensor, an optical sensor, or the like included in the sensing unit 23. In addition, the control unit 27 may detect the movement of a user through sensors provided in a controller that operates in conjunction with the electronic device 20.

In addition, the control unit 27 may perform operations (or functions) of the electronic device 20 using the application program stored in the memory 26.

The power supply unit 28 may receive external power or internal power under the control of the control unit 27 and supply power to each of the components included in the electronic device 20. The power supply unit 28 may include a battery, and the battery may be provided in an embedded or replaceable form.

At least some of the above components may operate cooperatively with each other to implement the operation, control, or control method of the electronic device according to various embodiments that will be described below. In addition, the operation, control, or control method of the electronic device may be implemented on the electronic device by executing at least one application program stored in the memory 26.

Hereinafter, descriptions will be provided based on embodiments in which an electronic device described as an example of the present invention is applied to a wearable device (for example, virtual reality (VR)/augmented reality (AR)/mixed reality (MR) glasses). However, embodiments of the electronic device according to the present invention may include a mobile phone, a smartphone, a laptop computer, a digital broadcasting terminal, a personal digital assistant (PDA), a portable multimedia player (PMP), a navigation device, a slate PC, a tablet PC, an ultrabook, and a wearable device. In addition to a head-mounted display (HMD), the wearable device may include a smart watch, contact lenses, VR/AR/MR glasses, and the like.

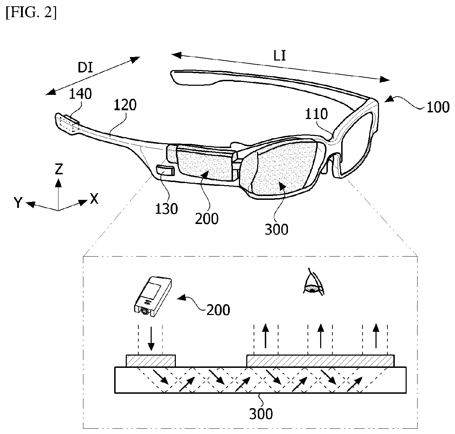

FIG. 2 is a perspective view of an electronic device for AR according to an embodiment of the present invention.

As shown in FIG. 2, the electronic device according to the embodiment of the present invention may include a frame 100, a projection device 200, and a display unit 300.

The electronic device may be provided as a glass-type electronic device (smart glass). The glass-type electronic device may be provided to be worn on the head of a human body and may include the frame 100 (case, housing, or the like) 100 for this purpose. The frame 100 may be formed of a flexible material to wear easily.

The frame 100 is supported on the head and provides a space for mounting various parts. As shown, an electronic component such as the projection device 200, a user input unit 130, or an audio output unit 140 may be mounted on the frame 100. In addition, a lens covering at least one of the left eye and the right eye may be removably mounted on the frame 100.

The frame 100 may have the shape of glasses worn on the face of a user's body as shown in the drawing, but the present invention is not necessarily limited thereto. The frame 100 may also have the shape of goggles or the like worn in close contact with the face of a user.

The frame 100 may include a front frame 110 having at least one opening, and a pair of side frames 120 that extend in a Y direction (see FIG. 2) intersecting the front frame 110 and are parallel to each other.

In the frame 100, a length DI in an X direction may be equal to or different from a length LI in the Y direction.

The projection device 200 is provided to control various electronic components provided in the electronic device. The projection device 200 may also called on an "optical output device," "optical projection device," "light irradiation device," "optical device," projector," or the like.

The projection device 200 may generate an image or a video of successive images shown to a user. The projection device 200 may include an image source panel that generates an image and a plurality of lenses that diffuse and converge light generated by the image source panel.

The projection device 200 may be fixed to one side frame 120 of two side frames 120. For example, the projection device 200 may be fixed inside or outside any one side frame 120 or may be integrally formed by being embedded inside any one side frame 120. Alternatively, the projection device 200 may be fixed to the front frame 110 or provided separately from the electronic device.

The display unit 300 may be implemented as a VR/AR/MR glass or HMD type. The HMD type is a display type that is mounted on the head and displays an image directly in front of the eyes of a user. When a user wears the electronic device, the display unit 300 may be positioned to correspond to at least one of the left eye and the right eye so as to provide an image directly in front of the eyes of the user. In this drawing, the display unit 300 is positioned at a portion corresponding to the right eye to output an image toward the right eye of the user. However, as described above, the present invention is not limited thereto, and the display unit 300 may be disposed on both the left eye and the right eye.

The display unit 300 may allow the user to visually perceive an external environment and may simultaneously allow an image generated by the projection device 200 to be shown to the user. For example, the display unit 300 may project an image onto a display region using a prism.

The display unit 300 may be formed to be transparent such that a projected image and a general forward field of view (a range that a user sees through their eyes) may be viewed simultaneously. For example, the display unit 300 may be semi-transparent and may be formed of an optical member including glass. For example, the display unit 300 may be a light guide device or may include a light guide device.

The display unit 300 may be inserted into and fixed in an opening included in the front frame 110 or positioned on a rear surface of the opening (for example, between the opening and the user) and fixed to the front frame 110. Although the drawing illustrates an example in which the display unit 300 is positioned on the rear surface of the opening and fixed to the front frame 110, the display unit 300 may be disposed and fixed at one of various positions of the frame 100.

As shown in FIG. 2, in the electronic device, when the projection device 200 allows image light of an image to be incident on one side of the display unit 300, the image light is emitted to the other side through the display unit 300, thereby allowing a user to view an image generated by the projection device 200.

Accordingly, the user may view an external environment through the opening of the frame 100 and may also simultaneously view an image generated by the projection device 200. That is, an image output through the display unit 300 may be seen overlapping a general field of view. The electronic device may provide AR for showing one image by overlapping a virtual image on a real image or background using such display characteristics.

Furthermore, in addition to such driving, images generated from an external environment and the projection device 200 may be provided to a user with a time difference for a short period of time that is not perceived by a person. For example, in one frame, an external environment may be provided to a person in one section, and in another section, an image from the projection device 200 may be provided to the person.

Alternatively, an overlap and a time difference may both be provided.

In addition, the projection device according to the embodiment may have a structure to be described below or may have a structure further including a waveguide or/and glass in the structure. In addition, the projection device may include a digital light processing (DLP) projector or a projection device.

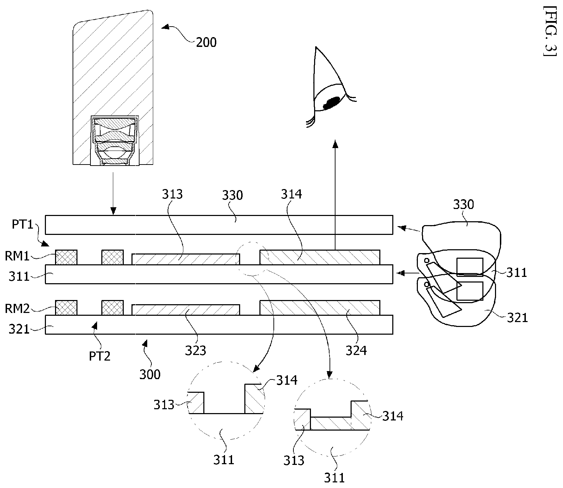

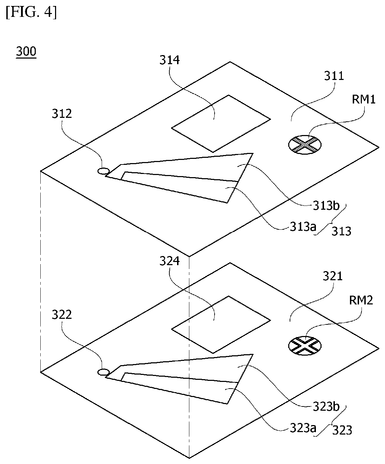

FIG. 3 is a view of a projection device and a light guide device according to an embodiment. FIG. 4 is an exploded view of the light guide device according to an embodiment.

Referring to FIGS. 3 and 4, in the present embodiment, a light guide device 300 may or may not include a projection device 200.

First, the projection device 200 according to the embodiment may include a light source unit, a housing, a lens unit, an optical modulator, and a projection lens unit.

The housing may have a space or a housing groove in which each component of the projection device 200 is accommodated or disposed. The housing may be positioned at an outermost side of the projection device 200.

In addition, the housing may have a structure of which one side is open. Accordingly, each of the above-described components may be assembled through an open region or surface. The housing may have various shapes. For example, the housing may have a hexahedral structure. Accordingly, the projection device according to the embodiment may be easily mounted on an electronic device. In addition, the projection device according to the embodiment may be easily miniaturized or made compact.

The light source unit may be disposed in the housing. The light source unit may be disposed adjacent to any one of outer surfaces of the housing.

The light source unit may include at least one light source. When a plurality of light sources are provided, the light sources may emit light having different wavelength bands or colors.

The lens unit may include at least one optical element (for example, a lens). The lens unit may focus light. Due to such a configuration, loss of light emitted from the light source unit may be reduced, and a reduction in volume of the projection device may be easily achieved.

In addition, the lens unit may include a relay lens or the like to align or change a path of light. In addition, the lens unit may adjust a size of illumination or an image (maximum region of light) provided by an illuminating system or may compensate for optical differences.

The lens unit may include an element (for example, a prism) that changes a path of light.

For example, the lens unit may include a total internal reflection prism (TIR prism). The prism may change a traveling direction of light as described above. That is, the prism may transmit and reflect light. Due to such a configuration, miniaturization of the projection device according to the embodiment can be achieved.

The optical modulator may be disposed behind the prism. The optical modulator may emit light transmitted through the prism back to the prism. The optical modulator may project an image by reflecting incident light. For example, the optical modulator may emit or project a video or an image based on an image signal incident through a substrate or the like. That is, the optical modulator may modulate light emitted by the light source unit.

The optical modulator according to the embodiment may include a digital micromirror device (DMD). The optical modulator may include a plurality of small mirrors. The optical modulator may include various optical modulation devices such as liquid crystal-on-silicon (LCoS).

The projection lens unit may be disposed behind the prism. When light emitted by the optical modulator is reflected by the prism, the light reflected by the prism may be incident on the projection lens unit. The light described above may be projected by the projection lens unit. The projection lens unit may project light emitted by the projection device onto a screen or waveguide (or a display unit).

In an embodiment, the projection lens unit may adjust a size of an image such that light is incident within an entrance pupil diameter (EPD) of a waveguide or the like.

The projection device according to the embodiment may include an illuminating system and a projecting system (or a projection system, a projecting unit, a projection unit, a projector unit, or the like).

The illuminating system may include a light source unit, a lens unit, and a prism as components and may receive source light (illumination light) and emit light in a predetermined direction. The illumination light may be transmitted or provided to an optical modulator of the projecting system.

The projecting system may include a prism, the optical modulator, and a projection lens unit. The projecting system may include the prism as a component. In an embodiment, the prism may be an element of the illuminating system and the projecting system.

Furthermore, the projecting system may further include the lighting system described above. That is, the projecting system may modulate illumination light generated by the illuminating system through the optical modulator and emit or diverge the modulated illumination light in a predetermined direction through the prism and the projection lens unit.

The optical modulator may reflect the illumination light into patterned light, and the patterned light may pass through the projection lens unit and may be output to the outside of the projection device.

In addition, an output unit of the projection device and an input unit of a waveguide or wavelength guide (waveguide) or the light guide device may be positioned to correspond to each other.

According to an embodiment, the light guide device 300 may include the projection device 200, a substrate, and a diffraction element (diffraction element region). Alternatively, the light guide device 300 may include the substrate and the diffraction element (diffraction element region). Furthermore, the light guide device 300 may include an optical member 330. The diffraction element (diffraction element region) may be provided as at least one of a transmissive or a reflective type. For example, when the diffraction element is a transmissive type, the diffraction element region may be positioned on a surface of the substrate adjacent to a projector. When the diffraction element is a reflective type, the diffraction element region may be positioned on a surface of the substrate disposed farther from the projector. Furthermore, a plurality of diffraction element regions may be present on a single substrate, and each region may be provided as any one of a reflective type and a transmissive type.

The light guide device 300 according to the embodiment may include a first substrate 311 and first diffraction element units 312, 313, and 314. Furthermore, the light guide device 300 according to the embodiment may include the projection device 200 (hereinafter referred to as a projector). As described above, the light guide device 300 may have a structure separated from the projector 200.

The light guide device 300 may include the first substrate 311, a first diffraction element region 312, a third diffraction element region 313, a second diffraction element region 314, a second substrate 321, and second diffraction element units 322, 323, and 324.

The light guide device 300 according to the present embodiment may include the first substrate 311, the first diffraction element region 312, the third diffraction element region 313, the second diffraction element region 314, the second substrate 321, a fourth diffraction element region 322, a sixth diffraction element region 323, and a fifth diffraction element region 324 described above. The second substrate 321, the second diffraction element units 322, 323, and 324, the first substrate 311, the first diffraction element units 312, 313, and 314, and a cover 330 (or an optical member) may be sequentially stacked or disposed in a stacking direction. Furthermore, the light guide device 300 may further include a first reference marker RM1 disposed on the first substrate 311 and a second reference marker RM2 disposed on the second substrate 321.

The first diffraction element unit according to the embodiment may include a plurality of diffraction element regions. The first diffraction element unit may be disposed on the first substrate 311 and may have a nanoscale pattern. Accordingly, the first diffraction element unit may be referred to as a "first pattern layer," "first pattern," or the like. Hereinafter, the first diffraction element unit will be described interchangeably with the first pattern layer. The second diffraction element unit may be referred to as a "second pattern layer," "second pattern," or the like. A diffraction element unit may be formed through various methods. For example, the diffraction element unit may be formed on a substrate through deposition.

Thus, the first diffraction element unit may diffract and guide incident light emitted from the projector 200. For example, the first diffraction element unit may include the first diffraction element region 312 and the second diffraction element region 314. Furthermore, the first diffraction element unit may include the third diffraction element region 313 positioned between the first diffraction element region 312 and the second diffraction element region 314. The first diffraction element region 312 may correspond to an "in-coupler." The second diffraction element region 314 may correspond to an "out-coupler." The third diffraction element region 313 may correspond to a folding grating.

The light guide device 300 may change a path of light, which is output from a light output unit and is incident thereon, and output the light to the outside again. Light may be sequentially incident on the first diffraction element region 312, the third diffraction element region 313, and the second diffraction element region 314 and then output to the outside again. A direction in which light is incident on the light guide device 300 may be a first direction. The first direction may be an incident direction of light or a direction opposite thereto.

The first diffraction element region 312 is a first input diffraction element on which light is incident, the third diffraction element region 313 is a first transmission diffraction element through which light is transmitted along a desired path, and the second diffraction element region 314 is a first output diffraction element from which light is emitted.

The fourth diffraction element region 322 is a second input diffraction element on which light is incident, the sixth diffraction element region 323 is a second transmission diffraction element through which light is transmitted along a desired path, and the fifth diffraction element region 324 is a second output diffraction element from which light is emitted.

In an embodiment, the first substrate 311 may guide light emitted by the projector 200. The first substrate 311 may serve as a path for transmitting light. The first diffraction element region 312, the third diffraction element region 313, and the second diffraction element region 314 may be disposed on the first substrate 311. Light may be totally reflected inside the first substrate 311 to travel along the interior of the first substrate 311. The first substrate 311 may be a waveguide.

The first diffraction element region 312, the third diffraction element region 313, and the second diffraction element region 314 may be disposed on the first substrate 311 to be spaced apart from each other. The first substrate 311 may extend in a second direction perpendicular to the first direction in which light is incident. The first substrate 311 may have a refractive index of 1.4 to 2.0.

The first diffraction element region 312 may guide light to be incident on the first substrate 311. That is, the first diffraction element region 312 may serve to guide light. Alternatively, the first diffraction element region 312 may receive light. That is, the first diffraction element region 312 may serve to guide light to be incident on the first substrate 311.

In addition, the first diffraction element region 312 may be disposed on the first substrate 311. Light may be incident on the light guide device 300 from the outside or the projector 200 through the first diffraction element region 312 and may be transmitted to the second diffraction element region 314 and the third diffraction element region 313 along the first substrate 311. The first diffraction element region 312 may change a path of light by diffracting the light.

The third diffraction element region 313 may serve to change a path of light. The third diffraction element region 313 may be disposed on the first substrate 311. The third diffraction element region 313 may change a path of incident light emitted through the first diffraction element region 312. The third diffraction element region 313 may change a path of light and guide the light toward the second diffraction element region 314. The third diffraction element region 313 may change a path of light by diffracting the light.

The second diffraction element region 314 may serve to guide light to be emitted to the outside (for example, a user). The second diffraction element region 314 may be disposed on the first substrate 311. Light may be emitted to the outside of the light guide device 300 through the second diffraction element region 314. The second diffraction element region 314 may receive light, of which a path has been changed, from the third diffraction element region 313, and may emit the received light to the outside. The second diffraction element region 314 may change a path of light and emit the light to the outside. The second diffraction element region 314 may change a path of light by diffracting the light. The second diffraction element region 314 may be disposed to be spaced apart from the first diffraction element region 312. The second diffraction element region 314 may emit light.

The first diffraction element region 312, the third diffraction element region 313, and the second diffraction element region 314 may include a plurality of protrusions. The plurality of protrusions may have a predetermined width, period, and height and may be disposed on the first diffraction element region 312, the third diffraction element region 313, and the second diffraction element region 314. The plurality of protrusions may protrude in the first direction (or the stacking direction or a direction opposite to the stacking direction) on the first diffraction element region 312, the third diffraction element region 313, and the second diffraction element region 314. The plurality of protrusions may be disposed to be spaced apart from each other in a vector direction of a pattern including the protrusions. According to the width, period, and height of the plurality of protrusions, a path of light may be changed differently after passing through the first diffraction element region 312, the third diffraction element region 313, and the second diffraction element region 314. The width of the protrusion may be a width of the protrusion in the vector direction of the pattern including the protrusions. The period of the protrusions may be an interval between one side surface of the protrusion and one side surface of an adjacent protrusion in the vector direction of the pattern including the protrusions. The height of the protrusion may be a height of a protruding portion of the protrusion in the first direction. These protrusions may be disposed to have a predetermined pattern. Even when the background appears in which a direction of a pattern is changed in the drawing appears, patterns (or protrusions) in the same region (diffraction element region or reference marker) may be disposed in the same vector direction and may have the same diffraction vector. Furthermore, even in one region, various diffraction vector patterns may be formed according to a grid.

In an embodiment, the first diffraction element region 312, the third diffraction element region 313, and the second diffraction element region 314 may be formed of the same material or different materials. For example, the first diffraction element region 312, the third diffraction element region 313, and the second diffraction element region 314 may be formed of the same material. The first diffraction element region 312, the third diffraction element region 313, and the second diffraction element region 314 may have a refractive index of 1.7 to 2.7.

Furthermore, an outline (boundary region) of the first diffraction element region 312 and an outline (boundary region) of the third diffraction element region 313 do not overlap each other. When the outlines overlap each other, a portion of incident light emitted from the third diffraction element region 313 to the second diffraction element region 314 may be blocked, and thus an image from the second diffraction element region 314 may not be emitted to a blocked region. Since efficiency decreases when the outline (boundary region) of the first diffraction element region 312 and the outline (boundary region) of the third diffraction element region 313 overlap each other, it is preferable that the outline (boundary region) of the first diffraction element region 312 and the outline (boundary region) of the third diffraction element region 313 do not overlap each other.

The third diffraction element region 313 according to the embodiment may include a first region 313a adjacent to the second diffraction element region 314 and a second region 1320 in contact with the first region 313a and spaced apart from the second diffraction element region 314.

The first region 313a and the second region 1320 may be some regions of the third diffraction element region 313. The first region 313a and the second region 313b may be two regions that are separated from each other when the third diffraction element region 313 is viewed in a stacking direction (or the first direction) in which an optical signal is incident. The first region 313a may be a region of the third diffraction element region 313 adjacent to the second diffraction element region 314. The first region 313a may be a region of the third diffraction element region 313 adjacent to the first diffraction element region 312. The second region 313b may be a region of the third diffraction element region 313 spaced apart from the second diffraction element region 314. The second region 313b may be a region of the third diffraction element region 313 spaced apart from the first diffraction element region 312. A separation distance between the first region 313a and the second diffraction element region 314 may be smaller than a separation distance between the second region 313b and the second diffraction element region 314. The shapes or areas of the first region 313a and the second region 313b may be different from each other. The first region 313a and the second region 313b may each include a plurality of surfaces. Some surfaces of the first region 313a and some surfaces of the second region 313b may be in contact with each other.

The first region 313a includes a first pattern, and the first pattern includes a first protrusion protruding in the first direction. The second region 313b may include a second pattern and a second protrusion protruding in the first direction. The first protrusion and the second protrusion may be portions protruding from the first region 313a and the second region 313b in the first direction, respectively. The first direction may be a direction in which light from the projector is incident on the first diffraction element region 312. The first direction may be an incident direction of light or a direction opposite thereto. The first direction is a direction perpendicular to the first substrate 311.

The first protrusion and the second protrusion may be repeatedly disposed with a predetermined period, width, and height on the first region 313a and the second region 313b. A plurality of first protrusions may be disposed perpendicular to the first direction and spaced apart from each other in a vector direction of the first region 313a of the third diffraction element region 313. A plurality of second protrusions may be disposed perpendicular to the first direction and spaced apart from each other in a vector direction of the second region 313b of the third diffraction element region 313.

In addition, the first diffraction element region 312, the second diffraction element region 314, and the third diffraction element region 313 may be connected to each other or spaced apart from each other. For example, at least portions of the first diffraction element region 312, the second diffraction element region 314, and the third diffraction element region 313 may include portions in which patterns are connected to each other. According to such a configuration, the manufacturing of each of the first diffraction element region 312, the second diffraction element region 314, and the third diffraction element region 313 can be facilitated. In addition, at least portions of the first diffraction element region 312, the second diffraction element region 314, and the third diffraction element region 313 may be formed to be spaced apart from each other in different regions. That is, the first diffraction element region 312, the second diffraction element region 314, and the third diffraction element region 313 may not include portions connected to each other. Thus, light transmission other than diffraction by a pattern can be suppressed, thereby improving accuracy and efficiency.

The optical member 330 may be disposed on the first substrate 311, the first diffraction element region 312, the third diffraction element region 313, and the second diffraction element region 314. The optical member 330 may be disposed adjacent to the projector 200 on the first substrate 311, the first diffraction element region 312, the third diffraction element region 313, and the second diffraction element region 314. Light may pass through the optical member 330 and may be incident on the first diffraction element region 312. The optical member 330 may have an effect of protecting the interior of the light guide device 300. The optical member 330 may have a refractive index of 1.4 to 1.55. The optical member 330 may have a refractive index of, for example, about 1.5. The optical member 330 may be referred to as a "cover," "cover glass," or the like.

Furthermore, hereinafter, in the light guide device according to each embodiment, the stacking direction (first direction) will be described as the illustrated "S-axis direction." The stacking direction (S-axis direction) may correspond to a direction from the first substrate 311 to the cover 330 or a direction from the second substrate 321 to the first substrate 311 or the cover 330.

The second substrate 321, the fourth diffraction element region 322, the sixth diffraction element region 323, and the fifth diffraction element region 324 may be disposed below or a lower surface of the first substrate 311. For example, the second substrate 321 may be positioned to be spaced apart from a lower portion of the first substrate 311.

The second substrate 321, the fourth diffraction element region 322, the sixth diffraction element region 323, and the fifth diffraction element region 324 may be disposed on the first substrate 311 to be spaced apart from the projector 200. The second substrate 321, the fourth diffraction element region 322, the sixth diffraction element region 323, and the fifth diffraction element region 324 may overlap the first substrate 311 in the first direction in which light is incident. The fourth diffraction element region 322, the sixth diffraction element region 323, and the fifth diffraction element region 324 may be disposed between the first substrate 311 and the second substrate 321.

The optical member or cover 330 may be disposed on the first substrate 311, the first diffraction element region 312, the third diffraction element region 313, and the second diffraction element region 314. The optical member 330 may be disposed adjacent to the projector 200 on the first substrate 311, the first diffraction element region 312, the third diffraction element region 313, and the second diffraction element region 314. Light may pass through the optical member 330 and may be incident on the first diffraction element region 312. The optical member 330 may have an effect of protecting the interior of the light guide device 300. The optical member 330 may have a refractive index of about 1.5.

As described above, the light guide device 300 may change a path of light, which is output from a light output unit and is incident thereon, and output the light to the outside again. In particular, light may pass through the first diffraction element unit PT1 and the first substrate 311 and may be provided to the second substrate 321 and the second diffraction element unit PT2 disposed below the first substrate 311. Accordingly, light may be sequentially incident on the fourth diffraction element region 322, the sixth diffraction element region 323, and the fifth diffraction element region 324 and then output to the outside again.

The second substrate 321 may serve as a path for transmitting light. The fourth diffraction element region 322, the sixth diffraction element region 323, and the fifth diffraction element region 324 may be disposed on the second substrate 321. Light may be totally reflected inside the second substrate 321 to travel along the interior of the second substrate 321. The second substrate 321 may include a waveguide. The fourth diffraction element region 322, the sixth diffraction element region 323, and the fifth diffraction element region 324 may be disposed on the second substrate 321 to be spaced apart from each other. The second substrate 321 may be disposed in the second direction perpendicular to the first direction in which light is incident. The first substrate 311 and the second substrate 321 may have a refractive index of 1.4 to 2.0.

The fourth diffraction element region 322 may serve as a path through which light is incident. The fourth diffraction element region 322 may be disposed on the second substrate 321. Light may be incident through the fourth diffraction element region 322 and transmitted through the second substrate 321. The fourth diffraction element region 322 may change a path of light by diffracting the light.

The sixth diffraction element region 323 may serve to change a path of light. The sixth diffraction element region 323 may be disposed on the second substrate 321. The sixth diffraction element region 323 may change a path of incident light emitted through the fourth diffraction element region 322. The sixth diffraction element region 323 may change a path of light such that the light is directed toward the fifth diffraction element region 324. The sixth diffraction element region 323 may change a path of light by diffracting the light.

The fifth diffraction element region 324 may serve as a path through which light is emitted. The fifth diffraction element region 324 may be disposed on the second substrate 321. Light may be emitted to the outside of the light guide device 300 through the fifth diffraction element region 324. The fifth diffraction element region 324 may receive light, of which a path has been changed, from the sixth diffraction element region 323, and may emit the light to the outside. The fifth diffraction element region 324 may change a path of light and emit the light to the outside. The fifth diffraction element region 324 may change a path of light by diffracting the light.

The fourth diffraction element region 322, the sixth diffraction element region 323, and the fifth diffraction element region 324 may include a plurality of protrusions. The plurality of protrusions may have a predetermined width, period, and height and may be disposed on the fourth diffraction element region 322, the sixth diffraction element region 323, and the fifth diffraction element region 324. The plurality of protrusions may protrude in the first direction on the fourth diffraction element region 322, the sixth diffraction element region 323, and the fifth diffraction element region 324. The plurality of protrusions may be disposed to be spaced apart from each other in a vector direction of a pattern including the protrusions perpendicular to the first direction. According to the width, period, and height of the plurality of protrusions, a path of light may be changed differently after passing through the fourth diffraction element region 322, the sixth diffraction element region 323, and the fifth diffraction element region 324. The width of the protrusion may be a width of the protrusion in the vector direction of the pattern including the protrusions. The period of the protrusions may be an interval between one side surface of the protrusion and one side surface of an adjacent protrusion in the vector direction of the pattern including the protrusions. The height of the protrusion may be a height of a protruding portion of the protrusion in the first direction. The first diffraction element region 312, the third diffraction element region 313, the second diffraction element region 314, the fourth diffraction element region 322, the sixth diffraction element region 323, and the fifth diffraction element region 324 may have a refractive index of 1.7 to 2.7. The refractive indices of the first diffraction element region 312, the third diffraction element region 313, the second diffraction element region 314, the fourth diffraction element region 322, the sixth diffraction element region 323, and the fifth diffraction element region 324 may be greater than or equal to the refractive indices of the first substrate 311 and the second substrate 321.

Furthermore, as described above, according to whether a diffraction element unit is a transmissive type or a reflective type, a position of the diffraction element unit may be positioned on an upper surface or the lower surface of the first substrate. For example, the first diffraction element region may be positioned on the lower surface of the first substrate 311 (a surface not facing the projector, that is, a first surface). In addition, the optical member may be positioned between the projector 200 and the first substrate 311.

Stacking of the first substrate and components disposed thereon and stacking of the second substrate and components disposed thereon may be performed through curing, an insulating member (or an intermediate layer or a blocking member), or the like.

The second substrate may guide light transmitted through the first substrate. For example, wavelengths or wavelength bands (for example, center wavelengths) of light guided by the first substrate and light guided by the second substrate may be different.

In the light guide device 300, the first reference marker RM1 and the second reference marker M2 may be positioned on respective substrates.

The first reference marker RM1 may be disposed on the first substrate 311. The second reference marker RM2 may be disposed on the second substrate 321. A detailed description of such reference markers will be provided below. The first reference marker RM1 is

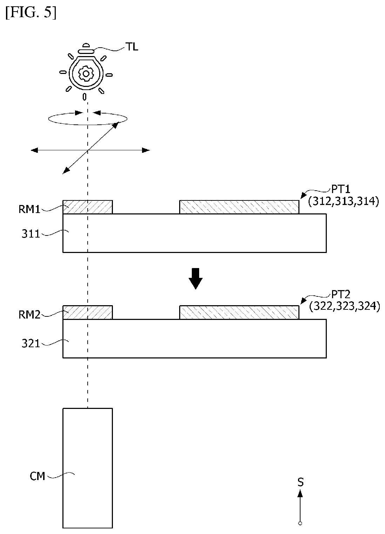

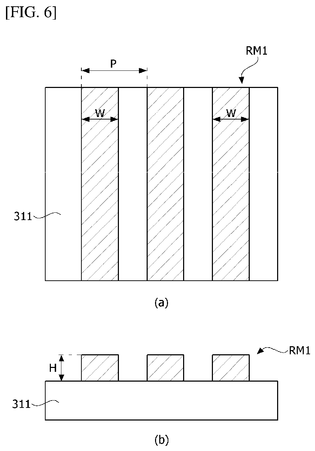

FIG. 5 is a cross-sectional view for describing a light guide device according to an embodiment. FIG. 6 shows a plan view and a cross-sectional view of a reference marker in the light guide device according to an embodiment.

Referring to FIGS. 5 and 6, each of a first reference marker RM1 and a second reference marker RM2 may be positioned to at least partially overlap a diffraction element unit of each substrate in a horizontal direction.

The first reference marker RM1 may at least partially overlap a first diffraction element unit PT1 in the horizontal direction. The second reference marker RM2 may at least partially overlap a second diffraction element unit PT2 in the horizontal direction.

The first reference marker RM1 and the first diffraction element unit PT1 may have the same material. In addition, the second reference marker RM2 and the second diffraction element unit PT2 may have the same material. For example, the first reference marker RM1, the second reference marker RM2, the first diffraction element unit PT1, and the second diffraction element unit PT2 may include at least one of a polymer, titanium dioxide (TiO₂), hafnium dioxide (HfO₂), aluminum trioxide (Al₂O₃), and silicon dioxide (SiO₂).

Due to such a configuration, an increase or decrease in cost associated with the manufacturing of the first reference marker RM1 and the second reference marker RM2 can be minimized, and the ease of the manufacturing can also be improved.

In addition, the first reference marker RM1 and the first diffraction element unit PT1 may be formed of different materials. Accordingly, a refractive index difference between the first reference marker RM1 and a first substrate 311 can be minimized. For example, the refractive index difference between the first reference marker RM1 and the first substrate 311 may be in a range of 0 to 1.

Similarly, the second reference marker RM2 and the second diffraction element unit PT2 may be formed of different materials. Accordingly, a refractive index difference between the second reference marker RM2 and a second substrate 321 can be minimized. For example, the refractive index difference between the second reference marker RM2 and the second substrate 321 may be in a range of 0 to 1.

Thus, user recognition or external user recognition of the first reference marker RM1 and the second reference marker RM2 may be difficult. As a result, inconvenience due to user recognition or the like can be prevented.

The first reference marker RM1 and the second reference marker RM2 may be diffraction elements, like diffraction elements of diffraction element units such as the first diffraction element unit PT1 and the second diffraction element unit PT2. For example, the first reference marker RM1 may include a plurality of protrusions. In addition, the second reference marker RM2 may include a plurality of protrusions.

The plurality of protrusions may form a pattern. That is, the first reference marker RM1 and the second reference marker RM2 may have a structure including a pattern. The first reference marker RM1 and the second reference marker RM2 may be diffraction elements or diffraction element regions. In a vector direction of a pattern including the plurality of protrusions, the plurality of protrusions may be disposed to be spaced apart from each other. According to a width W, a period P, and a height H of the plurality of protrusions, a path of light may be changed differently after passing through a first diffraction element region 312, a third diffraction element region 313, and a second diffraction element region 314. This may be equally applied to the second diffraction element unit.

As an example, the first reference marker RM1 and the second reference marker RM2 may have a period of 700 nm to 900 nm.

In addition, the first reference marker RM1 and the second reference marker RM2 may have a fill factor (FF) of 0.2 to 0.7. The FF may be expressed as width W/period P. Furthermore, the height H of the first reference marker RM1 and the second reference marker RM2 may be in a range of 100 nm to 600 nm. The first reference marker RM1 and the second reference marker RM2 may have a refractive index of 1.7 to 2.7.

In an embodiment, transmittance of the first reference marker RM1 and the second reference marker RM2 in a visible light band may be higher than transmittance of the first diffraction element unit and/or the second diffraction element unit in a visible light band. Due to such a configuration, the first reference marker RM1 and the second reference marker RM2 may have high transmittance in a visible light band. Therefore, the first reference marker RM1 and the second reference marker RM2 may not be visible to a user, thereby preventing user recognition. However, the first reference marker RM1 and the second reference marker RM2 may have low transmittance at specific wavelengths (for example, 850 nm and 940 nm). Therefore, the first reference marker RM1 and the second reference marker RM2 may be easily identified through machine vision. For example, since the first reference marker RM1 and the second reference marker RM2 have low transmittance at a corresponding wavelength, regions in which the first reference marker RM1 and the second reference marker RM2 are positioned may appear dark in an image obtained through machine vision for inspecting alignment or the like. Furthermore, a region in which the first reference marker RM1 and the second reference marker RM2 overlap each other in a stacking direction may appear darker. Thus, misalignment (rotation or movement) between the first substrate 311 and the second substrate 321 can be easily identified, or alignment can be easily determined to perform assembly.

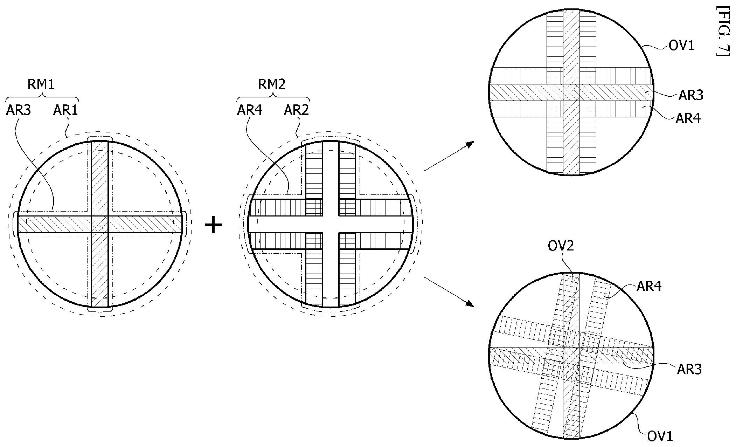

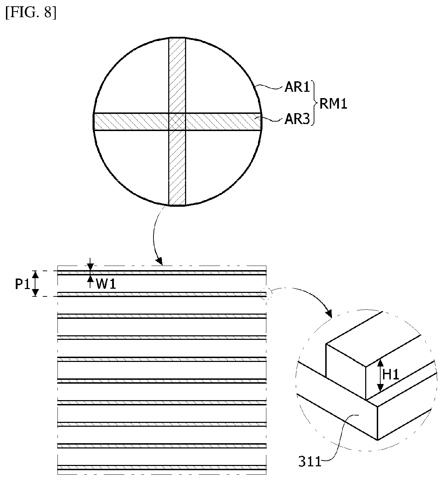

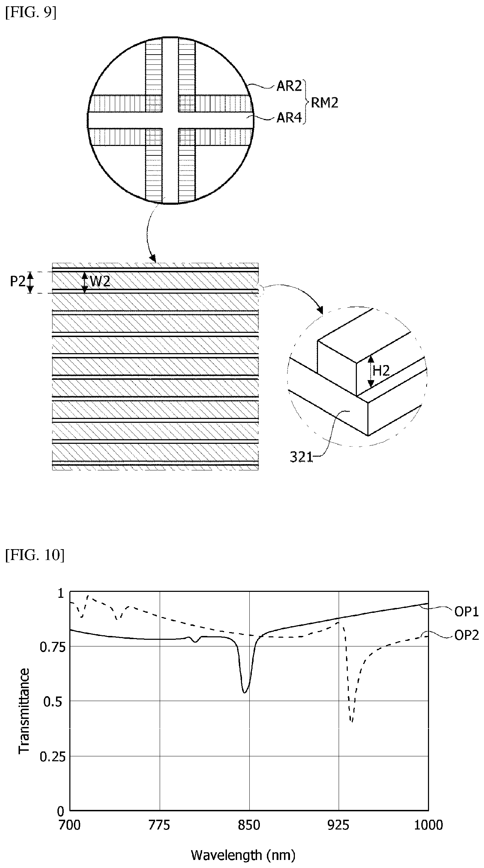

FIG. 7 is a view for describing positions of a first reference marker and a second reference marker in a light guide device according to an embodiment. FIG. 8 is a view of the first reference marker in the light guide device according to an embodiment. FIG. 9 is a view of the second reference marker in the light guide device according to an embodiment. FIG. 10 is a graph showing transmittance for each wavelength according to conditions of reference markers in a light guide device according to the embodiment.

Referring to FIG. 7, according to an embodiment, a first reference marker RM1 and a second reference marker RM2 may not at least partially overlap each other in a stacking direction. In addition, the first reference marker RM1 and the second reference marker RM2 may have at least partially overlapping regions.

Specifically, the first reference marker RM1 and the second reference marker RM2 may include a first region AR1 and a second region AR2 with the same shape, respectively. For example, the first reference marker RM1 may include the first region AR1. The second reference marker RM2 may include the second region AR2. The first region AR1 and the second region AR2 may have the same shape. For example, when the first region AR1 is a circle, the second region AR2 may also be a circle. Furthermore, the first region AR1 and the second region AR2 may overlap each other in the stacking direction.

Accordingly, the first region AR1 of the first reference marker RM1 and the second region AR2 of the second reference marker RM2 may respectively have regions OV1 that overlap each other in the stacking direction on a first substrate 311 and a second substrate 321. In this case, the overlapping regions OV1 may appear very dark in an image through machine vision. The first reference marker RM1 and the second reference marker RM2 may at least partially overlap each other in the stacking direction. In particular, the first region AR1 and the second region AR2 may be in a state in which the first substrate or the second substrate does not move in a direction perpendicular to the stacking direction. That is, it can be confirmed that the first region AR1 and the second region AR2 are in an alignment state in which one substrate (for example, the first substrate) does not move in the direction perpendicular to the stacking direction. Hereinafter, a description will be provided based on the movement and rotation of the first reference marker RM1. Furthermore, whether to move the first reference marker RM1 and the second reference marker RM2 may be easily determined, thereby enabling precise assembly.

On the other hand, the first reference marker RM1 and the second reference marker RM2 may not partially overlap each other in the stacking direction. When the first region AR1 and the second region AR2 do not at least partially overlap each other in the stacking direction, a first diffraction element unit and a second diffraction element unit may be misaligned in the direction perpendicular to the stacking direction. Accordingly, when the first region AR1 and the second region AR2 are at least partially misaligned in the stacking direction, the first substrate may be moved in the direction perpendicular to the stacking direction (horizontal direction) to prevent misalignment. Alternatively, when the first and second substrates are not parallel and one substrate is tilted, the substrates may be adjusted to be parallel to each other. Thus, precise assembly may be performed in a state in which the first substrate and the second substrate are aligned. Furthermore, even when the first reference marker RM1 of the first substrate to be assembled is out of focus, misalignment can be easily prevented, and even when the first substrate is not within a focal distance of a camera, alignment can be easily determined. Accordingly, damage to each diffraction element unit can be prevented.

The first reference marker RM1 and the second reference marker RM2 may include a third region AR3 and a fourth region AR4 with different shapes. For example, the first reference marker RM1 may include the third region AR3. The second reference marker RM2 may include the fourth region AR4. The third region AR3 and the fourth region AR4 may have different shapes. For example, on the same plane, the third region AR3 and the fourth region AR4 may not overlap each other. In other words, when aligned, the third region AR3 and the fourth region AR4 may not overlap each other in the stacking direction. Therefore, the third region AR3 and the fourth region AR4 may have different shapes.

As an embodiment, the third region AR3 and the fourth region AR4 may have regions OV2 that at least partially overlap each other in the stacking direction. In this case, the first diffraction element unit and the second diffraction element unit may be at least partially misaligned in the stacking direction. When the third region AR3 and the fourth region AR4 at least partially overlap each other in the stacking direction, the first substrate may be moved in the direction perpendicular to the stacking direction (horizontal direction) or rotated about the stacking direction as an axis to prevent misalignment. Alternatively, when the first and second substrates are not parallel and one substrate is tilted, the substrates may be adjusted to be parallel to each other. Thus, precise assembly may be performed in a state in which the first substrate and the second substrate are aligned. In this way, rotational errors occurring between the first substrate and the second substrate (or between the first diffraction element unit and the second diffraction element unit) and movement errors occurring between the first substrate and the second substrate (or between the first diffraction element unit and the second diffraction element unit) due to movement in the horizontal direction may be easily recognized through the third region AR3 and the fourth region AR4.

In addition, at least one of the first reference marker RM1 and the second reference marker RM2 may have a period different from that of any one of the first diffraction element unit and the second diffraction element unit. For example, at least one of the first reference marker RM1 and the second reference marker RM2 may have a period that is greater than the period of any one of the first diffraction element unit and the second diffraction element unit.

For example, the period of the first reference marker RM1 and the second reference marker RM2 may be different from the period of the first diffraction element unit and the second diffraction element unit. The period of the first reference marker RM1 and the second reference marker RM2 may be greater than the period of the first diffraction element unit and the second diffraction element unit.

Furthermore, due to such a period difference, a wavelength band in which the first reference marker RM1 and the second reference marker RM2 have minimum transmittance may differ from a diffraction wavelength of the first diffraction element unit and the second diffraction element unit. A wavelength band in which transmittance is minimum may not be a visible light wavelength band.

Due to such a configuration, the reference marker and the diffraction element unit may have different periods and thus may have different transmittances for each wavelength of light. In particular, since wavelength bands in which transmittance is minimum are different from each other, marker recognition and image recognition may be implemented in different wavelength bands. For example, light may be diffracted and guided by the first diffraction element unit and the second diffraction element unit in a visible light region, and the first reference marker and the second reference marker may have high transmittance in a visible light region, thereby minimizing user recognition of the reference markers. Furthermore, at the same time, a user may visually recognize an image provided by a projector more accurately. In addition, in a plurality of combiners, that is, the first substrate (including the first diffraction element unit) and the second substrate (including the second diffraction element unit), a degree of freedom of arrangement thereof can be improved. For example, the first reference marker and the second reference marker may be disposed inside or outside an eye box.

Referring further to FIGS. 8 and 9, the first reference marker RM1 and the second reference marker RM2 may differ from each other in at least one of a period, a width, and a height. The first reference marker RM1 and the second reference marker RM2 may have the same height. For example, a height H1 of a protrusion (or a pattern) of the first reference marker RM1 may be equal to a height H2 of a protrusion (or a pattern) of the second reference marker RM2. However, a period P1 and/or a width W1 of the protrusion (or the pattern) of the first reference marker RM1 may be equal to a period P2 and/or a width W2 of the protrusion (or the pattern) of the second reference marker RM2. Due to such a configuration, misalignment recognition or precise assembly through machine vision may be performed in various wavelength bands. That is, compatibility with reference markers can be improved.

In addition, as another example, the first reference marker RM1 and the second reference marker RM2 may have the same period, width, and height. For example, the first reference marker RM1 and the second reference marker RM2 may have the same height, width, and period. For example, the height (width and period) of the protrusion (or the pattern) of the first reference marker RM1 may be equal to the height (width and period) of the protrusion (or the pattern) of the second reference marker RM2. Accordingly, a wavelength band in which the first reference marker RM1 has minimum transmittance may be equal to a wavelength band in which the second reference marker RM2 has minimum transmittance. Due to such a configuration, misalignment between the first reference marker RM1 and the second reference marker RM2 may be more clearly recognized in a wavelength band in which transmittance is minimum. That is, misalignment recognition through machine vision may be performed more effectively. Therefore, misalignment recognition and assembly accuracy can be improved.

Vector directions of the patterns of the first reference marker and the second reference marker may be the same.

Referring further to FIG. 10, OP1 corresponds to a case in which a reference marker has a period of 900 nm, a width of 630 nm, and a height of 200 nm. OP2 corresponds to a case in which a reference marker has a period of 800 nm, a width of 160 nm, and a height of 200 nm.

A wavelength corresponding to minimum transmittance for OP1 is about 850 nm. A wavelength corresponding to minimum transmittance for OP2 is about 950 nm. In this case, in machine vision, application of OP1 and/or OP2 may be considered according to a wavelength for vision recognition (for example, a light-receiving wavelength band of an image sensor).

For example, when a wavelength at which vision recognition is possible is 950 nm, the first reference marker and the second reference marker to which OP1 is applied may be applied. Accordingly, misalignment may be more easily recognized.

When the wavelength at which vision recognition is possible is 850 nm, the first reference marker and the second reference marker to which OP2 is applied may be applied. Accordingly, misalignment may be more easily recognized.

In addition, when a wavelength at which vision recognition is possible in a range of 950 nm and 850 nm, OP1 and OP2 may be applied to the first reference marker and the second reference marker.

Thus, when two or more combiners, that is, the first and second substrates on which a pattern layer or a diffraction element unit is formed, are aligned, position and rotation errors can be more easily identified, thereby implementing precise assembly. Accordingly, the light guide device according to the embodiment may include the first reference marker and the second reference marker which are spaced apart from each other and have regions that do not at least partially overlap each other in the stacking direction. In addition, the light guide device may include the first reference marker and the second reference marker which are spaced apart from each other and have regions that do at least partially overlap each other in the stacking direction.

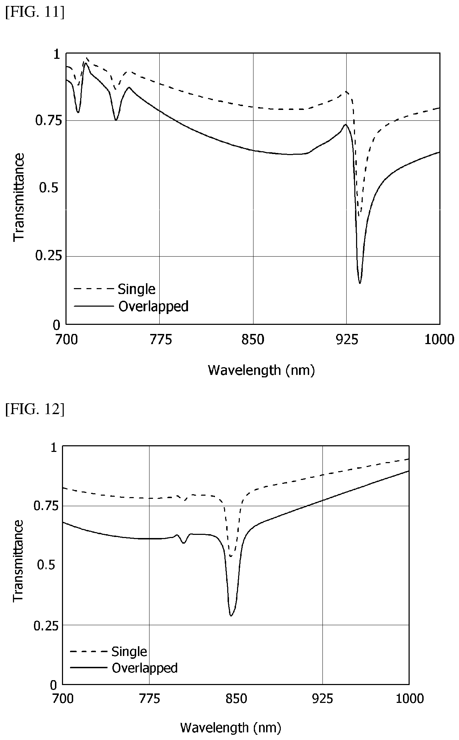

FIG. 11 is a graph showing transmittance for each wavelength according to a reference marker of one structure in a light guide device according to an embodiment. FIG. 12 is a graph showing transmittance for each wavelength according to a reference marker of another structure in a light guide device according to an embodiment.

In FIGS. 11 and 12, "single" denotes a graph showing transmittance for each wavelength in any one of a first reference marker and a second reference marker under the same conditions (width, period, and height) or in a region in which the first reference marker and the second reference marker do not overlap each other in a stacking direction. "Overlapped" denotes a graph showing a case in which the first reference marker and the second reference marker overlap each other in the stacking direction under the same conditions (width, period, and height).

Referring to FIGS. 10 and 11, when a wavelength at which applied vision recognition is possible is 950 nm, the first reference marker and the second reference marker to which OP1 is applied may be applied. Accordingly, since transmittance for regions overlapping each other in the stacking direction is reduced to 25% or less, recognition of rotation or movement errors may be clearer. Accordingly, misalignment may be more easily recognized.

Referring to FIGS. 10 and 12, when a wavelength at which applied vision recognition is possible is 850 nm, the first reference marker and the second reference marker to which OP2 is applied may be applied. Accordingly, since transmittance for regions overlapping each other in the stacking direction is reduced to about 25%, recognition of rotation or movement errors may be clearer. Accordingly, misalignment may be more easily recognized.

In this way, in the light guide device according to the embodiment, conditions (period, height, and width) of reference markers are changed according to a wavelength at which vision recognition is possible, and different shapes (regions) are provided, thereby suppressing user recognition and accurately determining misalignment.

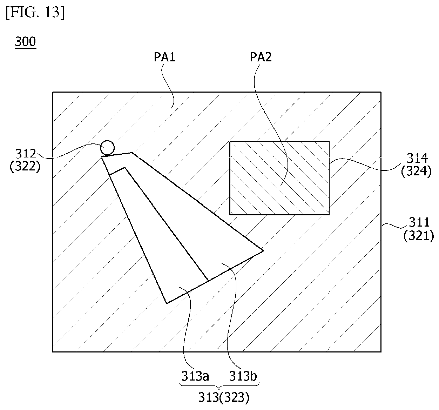

FIG. 13 is a view illustrating arrangement positions of reference markers in a light guide device according to an embodiment.

Referring to FIG. 13, as described above, a first reference marker and a second reference marker may have high transmittance in a visible light range, and thus user recognition of the reference markers can be minimized. Furthermore, at the same time, a user may visually recognize an image provided by a projector more accurately. In this way, the first reference marker and the second reference marker may have high transmittance in the visible light range and thus may be disposed in regions excluding regions in which diffraction element units are disposed.

For example, the first reference marker may be disposed in a region other than first diffraction element units 312, 313, and 314. That is, the first reference marker may be disposed on a first substrate 311 not to overlap the first diffraction element units 312, 313, and 314 in a stacking direction.

Likewise, the second reference marker may be disposed in a region other than second diffraction element units 322, 323, and 324. That is, the second reference marker may be disposed on a second substrate 321 not to overlap the second diffraction element units 322, 323, and 324 in the stacking direction.

That is, the first reference marker and the second reference marker may be positioned in a region PA1 that is positioned outside an eye box and spaced apart from a diffraction element unit.

As a modified example, the first reference marker and the second reference marker may also be positioned in a region PA2 inside the eye box. For example, the first reference marker and the second reference marker may be positioned in a region or a position that does not affect image provision. In addition, in the eye box, between protrusions of a second diffraction element region (or a fifth diffraction element region), conditions (period, height, and width) different from those of the second diffraction element region (or the fifth diffraction element region) may be provided.

Accordingly, the light guide device according to the embodiment can provide an improved degree of design freedom for reference markers.

As a modified example, the first reference marker and the second reference marker may be positioned outside the eye box. For example, the first reference marker and the second reference marker may be positioned in the region PA1. Furthermore, at least a portion thereof may be recognizable by a user in a visible light region. Thus, in addition to machine vision, the first reference marker and the second reference marker may also be additionally used as alignment marks during assembly. Accordingly, the ease of manufacturing can be improved.

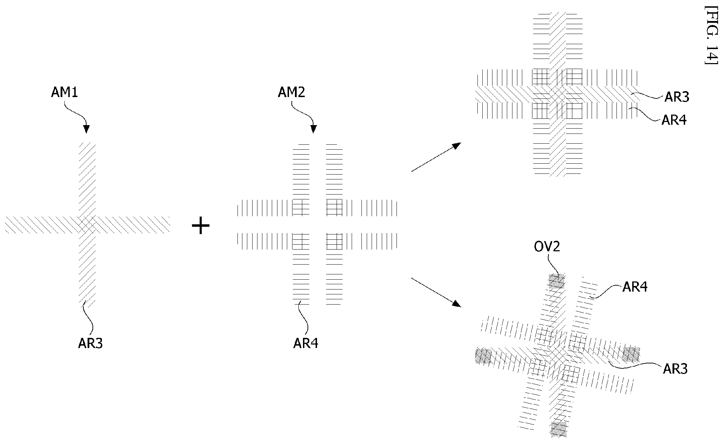

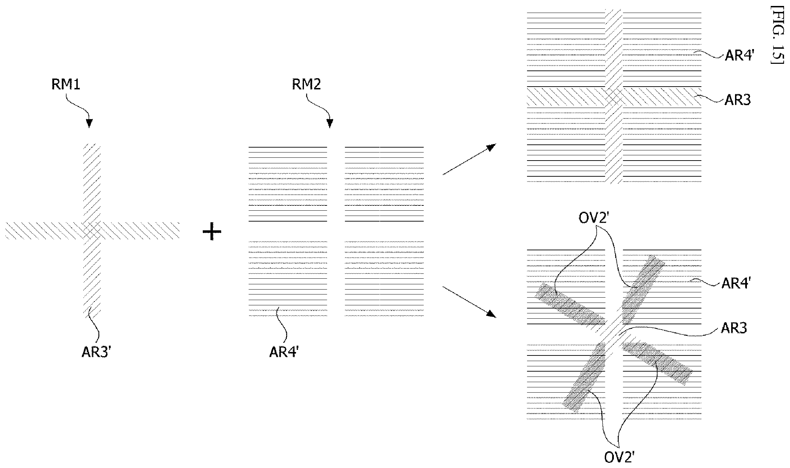

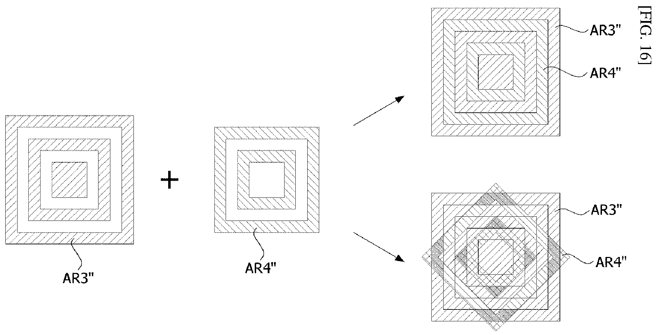

FIG. 14 is a view for describing another example and positions of a first reference marker and a second reference marker in a light guide device according to an embodiment. FIG. 15 is a view for describing still another example and positions of a first reference marker and a second reference marker in a light guide device according to an embodiment. FIG. 16 is a view for describing yet another example and positions of a first reference marker and a second reference marker in a light guide device according to an embodiment.

FIGS. 14 to 16 illustrate examples of the first reference marker and the second reference marker according to various examples.

As described above, the first reference marker and the second reference marker according to the embodiment may include first and second regions that overlap each other in a stacking direction and third and fourth regions that do not overlap each other in the stacking direction.

Referring to FIG. 14, the first reference marker and the second reference marker according to the embodiment may respectively include a third region AR3 and a fourth region AR4 that do not at least partially overlap each other in the stacking direction.

A first reference marker RM1 may include the third region AR3. A second reference marker RM2 may include the fourth region AR4.

When there is no misalignment (when aligned), the third region AR3 and the fourth region AR4 may appear slightly dark in an image obtained through machine vision. As shown in FIG. 12, about 50% of transmitted light may appear in an image obtained through machine vision.

When there is misalignment, the third region AR3 and the fourth region AR4 may have regions OV2 that at least partially overlap each other in the stacking direction. That is, a first diffraction element unit and a second diffraction element unit may be at least partially misaligned in the stacking direction. In this way, the third region AR3 and the fourth region AR4 at least partially overlap each other in the stacking direction, a first substrate may be moved in a direction perpendicular to the stacking direction (horizontal direction) or rotated about the stacking direction as an axis to more easily prevent misalignment.

Referring to FIG. 15, the first reference marker and the second reference marker according to the embodiment may respectively include a third region AR3' and a fourth region AR4' that do not at least partially overlap each other in the stacking. A first reference marker RM1 may include the third region AR3'. A second reference marker RM2 may include the fourth region AR4'.

In this case, unlike that shown in FIG. 14, an area of the fourth region AR4' may be set to be greater than an area of the third region AR3'. Accordingly, as a reference marker is formed to have a large area, rotation of a first substrate or a second substrate in the stacking direction can be more clearly recognized. Descriptions of cases in which misalignment is absent and present are the same as those described above.

That is, as described above, when there is misalignment, the third region AR3' and the fourth region AR4' may have regions OV2' that at least partially overlap each other in the stacking direction. That is, in this case, a degree of rotation about the stacking direction as an axis can be more clearly recognized, thereby more easily preventing misalignment between a first diffraction element unit and a second diffraction element unit.

Referring to FIG. 16, the first reference marker and the second reference marker according to the embodiment may respectively include a third region AR3'' and a fourth region AR4'' that do not at least partially overlap each other in the stacking. A first reference marker RM1 may include the third region AR3''. A second reference marker RM2 may include the fourth region AR4''.

In this case, unlike that shown in FIG. 14, at least one of the fourth region AR4'' and the third region AR3'' may be formed as a closed loop. For example, the fourth region AR4'' and the third region AR3'' may be formed as a closed loop. In particular, respective regions may be disposed to intersect each other. Accordingly, not only movement of a reference marker but also rotation thereof can be more clearly recognized. Descriptions of cases in which misalignment is absent and present are the same as those described above.

That is, as described above, when there is misalignment, the third region AR3'' and the fourth region AR4'' may have regions that at least partially overlap each other in the stacking direction. That is, in this case, a degree of rotation about the stacking direction as an axis can be more clearly recognized, thereby more easily preventing misalignment between a first diffraction element unit and a second diffraction element unit.

The features, structures, effects, and the like described in the embodiments above are included in at least one embodiment and are not necessarily limited to only one embodiment. Furthermore, the features, structures, effects, and the like exemplified in each embodiment can be combined or modified and implemented in other embodiments by a person having ordinary knowledge in the art to which the embodiments belong. Therefore, the contents related to these combinations and modifications should be interpreted as being included within the scope of the embodiments.

While the present invention has been described with reference to embodiments, this is merely an example and is not intended to limit the embodiments, and those skilled in the art to which the embodiments pertain will be able to understand that various modifications and applications not exemplified above are possible without departing from the essential characteristics of the present embodiment. For example, each component specifically shown in the embodiment may be implemented with modifications. In addition, differences related to the modifications and applications should be construed as being included in the scope of the embodiments defined in the appended claims.

## Claims

1. A light guide device comprising:
a first substrate;
a first diffraction element unit disposed on the first substrate;
a second substrate disposed to be spaced apart from the first substrate;
a second diffraction element unit disposed on the second substrate;
a first reference marker disposed on the first substrate; and
a second reference marker disposed on the second substrate,
wherein the first reference marker and the second reference marker do not at least partially overlap each other in a stacking direction.

2. The light guide device of claim 1, wherein any one of a period of the first reference marker and a period of the second reference marker is different from a period of any one of the first diffraction element unit and the second diffraction element unit.

3. The light guide device of claim 2, wherein any one of the period of the first reference marker and the period of the second reference marker is greater than the period of any one of the first diffraction element unit and the second diffraction element unit.

4. The light guide device of claim 1, wherein a wavelength band in which the first reference marker and the second reference marker have minimum transmittance is different from a diffraction wavelength of each of the first diffraction element unit and the second diffraction element unit.

5. The light guide device of claim 1, wherein the first reference marker and the second reference marker are positioned within an eye box.

6. The light guide device of claim 1, wherein the first reference marker and the first substrate have a refractive index difference of 0 to 1.

7. The light guide device of claim 1, wherein the first reference marker and the first diffraction element unit have the same material.

8. The light guide device of claim 1, wherein the second reference marker and the second diffraction element unit have the same material.

9. The light guide device of claim 1, wherein the first reference marker, the second reference marker, the first diffraction element unit, and the second diffraction element unit include at least one of a polymer, TiO₂, HfO₂, Al₂O₃, and SiO₂.

10. The light guide device of claim 1, wherein a wavelength band in which the first reference marker has minimum transmittance is equal to a wavelength band in which the second reference marker has minimum transmittance.
